# EUROPEAN PATENT APPLICATION

(11) **EP 0 582 283 A1**
(43) Date of publication of application: **09.02.1994**
(21) Application number: 93112483.8
(22) Date of filing: 04.08.1993
(51) Int. Cl.: G06K 11/14

(54) **Vibration transmission board for inputting coordinate**

(30) Priority: 05.08.1992 JP 208980/92
(71) Applicant: CANON KABUSHIKI KAISHA, Tokyo (JP)
(72) Inventor: Kawakami, Tatsuro, c/o Canon K. K., Ohta-ku, Tokyo (JP)
(74) Representative: Weser, Wolfgang

(57) **Abstract**

Disclosed is a vibration transmission board for inputting coordinate device. The vibration transmission board is provided with a member having directionality in a direction of vibration transmission, whereby the vibration is suppressed in a predetermined direction to improve accuracy of positional detection.

## Description

### BACKGROUND OF THE INVENTION

### Field of the Invention

The present invention relates to an inputting coordinate device, and more particularly to a vibration transmission board for use in an inputting coordinate device, for detecting an elastic vibration wave entered by a vibration input pen by plural sensors provided in the vibration transmission board and determining the coordinate of the input position of the vibration by the vibration input pen, based on the transmission time of the elastic vibration entered from the pen to the vibration transmission board.

### Related Background Art

Among various inputting coordinate devices for entering handwritten characters or patterns into a processing apparatus such as a computer, there is known a method, which is simple in structure and highly reliable, of calculating the coordinates by the delay time in propagation of an ultrasonic vibration. The vibration transmission board employed in this method is required to securely transmit the ultrasonic vibration, entered by a vibrating input pen under various operating conditions of the inputting coordinate device, in the form of lamb wave to the sensor. Since the vibration transmission board can be composed of a transparent material such as plastics or glass, there can be obtained a user-friendly information input device that the user can use as if he/she wrote an image on paper, by superposing the vibration transmission board on an image display such as a liquid crystal display unit.

With respect to the material constituting the vibration transmission board, glass is effective in consideration of the high transparency and the limited attenuation of the vibration. However, if the vibration transmission board is composed of a single glass plate, the determination of the position will fluctuate by an inclination of the vibrating input pen in the actual use of this inputting coordinate device. This drawback is induced by a variation in the force vector of the vibration entered into the glass, resulting from the inclination of the vibration input pen and causing a variation in the phase of lamb wave propagating in the vibration transmission board. As a result, the wave detected by the sensors varies in the propagation time, deteriorating the precision of the detected position. For resolving this drawback of dependence on the inclination of the vibration input pen, there has already been proposed the vibration transmission board of a multi-layered structure. However, further improvement has been longed for in the precision of detection of the vibration input position.

### SUMMARY OF THE INVENTION

An object of the present invention is to provide a vibration transmission board for inputting coordinate, capable of improving the precision of detection of the vibration input position.

Another object of the present invention is to provide a vibration transmission board for inputting coordinate, provided with a member having directionality in a direction of vibration transmission, whereby the entered vibration is suppressed in a predetermined direction and supplied to the sensors.

Still another object of the present invention is to provide a vibration transmission board for inputting coordinate, in which two layers are maintained in point contacts whereby the direction and the range of the transmitted vibration is limited.

Still another object of the present invention is to provide a vibration transmission board for inputting coordinate, in which the direction and the range of the transmitted vibration is suppressed by gaps between polyhedrons.

Still another object of the present invention is to provide a vibration transmission board for inputting coordinate, in which the transmission of vibration is rendered directional by the use of a member with laminar crystal structure as the input layer.

Still another object of the present invention is to provide a vibration transmission board for inputting coordinate, in which a solid lubricant layer is provided to prevent the phase variation in the transmission of vibration.

### BRIEF DESCRIPTION OF THE DRAWINGS

Fig. 1 is a perspective view of a first embodiment;
Fig. 2 is a cross-sectional view of the first embodiment;
Fig. 3 is a perspective view of a second embodiment;
Fig. 4 is a cross-sectional view of the second embodiment;
Fig. 5 is a perspective view of a third embodiment;
Fig. 6 is a cross-sectional view of the third embodiment;
Fig. 7 is a perspective view of a fourth embodiment;
Fig. 8 is a cross-sectional view of an input layer 60A;
Figs. 9 and 10 are schematic views of atomic arrangement models of a member to be employed in the input layer 60A;
Fig. 11 is a perspective view of a fifth embodiment;
Figs. 12 to 15 are cross-sectional views showing various modes of adhesion state in the embodiment;
Fig. 16 is a block diagram of the circuit of an inputting coordinate device utilizing the embodiment;
Fig. 17 is a lateral view showing the contact state of the vibration input pen in the embodiment;
Fig. 18 is a wave form chart showing the detection signal of a sensor;
Figs. 19 and 20 are cross-sectional views showing propagation of vibration in the conventional structure; and
Figs. 21 to 23 are cross-sectional views showing propagation of vibration in the embodiment.

### DETAILED DESCRIPTION OF THE PREFERRED EMBODIMENTS

Now the present invention will be clarified in detail by preferred embodiments thereof, with reference to the attached drawings.

### [First embodiment]

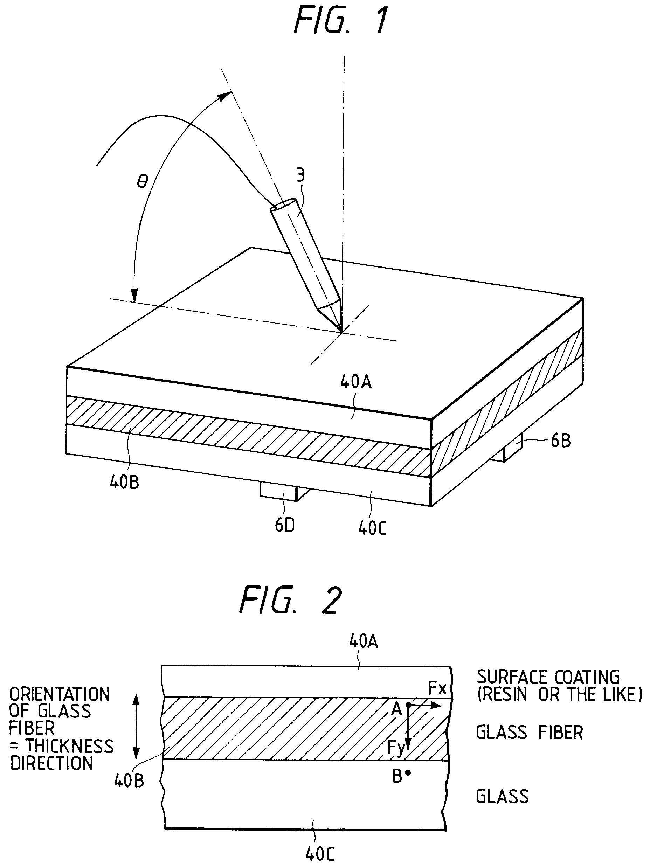

Fig. 1 illustrates a first embodiment, wherein the vibration transmission board is composed of an input layer 40A, an intermediate layer 40B and a vibration propagation layer 40C. In the present embodiment, the intermediate layer 40B is composed of glass fibers of 0.5 mm spread in a state of single fibers. At the input face side with a vibration input pen 3, a polycarbonate layer of 0.3 mm is coated as the input layer. The input layer is provided for preventing the difficulty in the actual input operation with the vibration input pen 3, by the reason of the use of glass fibers in the intermediate layer 40B. The vibration propagation layer 40C is composed of a glass plate of a thickness of 1.0 mm. The vibration entered by the pen 3 into the input layer 40A is transmitted, across the intermediate layer 40B, to the vibration propagation layer 40C, and is detected by sensors 6A to 6D mounted on the propagation layer 40C (sensors 6A and 6C not shown in Fig. 1).

Fig. 2 schematically illustrates the cross-sectional structure of the vibration transmission board. The vibration entered by the vibration input pen 3 is inclined by an angle ϑ with respect to the normal line to the vibration transmission board, the force working on a mass point A in the intermediate layer 40B has a component Fₓ in x-direction and a component F_{y} in y-direction. If the component Fₓ is transmitted to the mass point in the vibration propagation layer as in the conventional configuration, the vibration in the vibration propagation layer becomes laterally asymmetrical to generate a phase delay ε depending on the inclination of the vibration input pen. In the present embodiment, however, the glass fibers are oriented parallel to the direction of thickness of the board, whereby the propagation of the component Fₓ in the direction of thickness is suppressed, in comparison with that of the component F_{y}. As a result, the component Fₓ becomes smaller in a mass point B in the vibration propagation layer 40C, whereby the lateral asymmetry of the vibration in the vibration propagation layer 40C is reduced, thus preventing the deterioration in the precision of position detection, resulting from the inclination of the vibration input pen. The intermediate layer 40B of the present embodiment may also be composed of plastic fibers of acrylic resin, instead of the glass fibers.

### [Second embodiment]

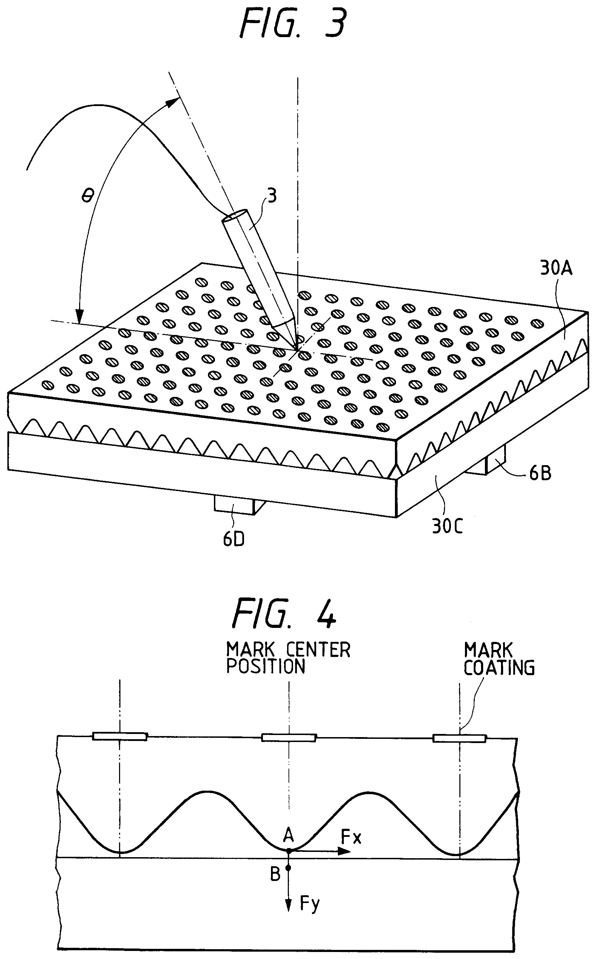

Fig. 3 illustrates the structure of a second embodiment, wherein the vibration transmission board has a two-layered structure, composed of an input layer 30A and a vibration propagation layer 30C. In order to suppress the transmission of the vibrating component of the input layer 30A in the longitudinal direction of the board to the vibration propagation layer 30C, the layers are not mutually adhered but convex portions of the input layer 30A are in contact with the propagation layer 30C. This configuration is to enhance the effect of preventing the transmission of the influence of inclination of the vibration input pen 3 into the vibration propagation layer 30C. On the input face of the input layer 30A, there are provided semi-transparent marks corresponding to the convex portions (refer to Fig. 4) of the input layer 30A, and the vibration entered by the vibration input pen 3 in the vicinity of a mark (indicating the inputting coordinate position) on the input face is transmitted through the input layer 30A to the vibration propagation layer 30C, and is detected by the sensors 6A to 6D mounted on the layer 30C (sensors 6A and 6C are not shown in Fig. 3). An angle ϑ between the vibration input pen 3 and the vibration transmission board represents an estimated artifical contact angle, anticipated at the use of the present inputting coordinate device. In the present embodiment, the marks are formed as circles of a diameter of 0.5 mm. The input layer 30A and the vibration propagation layer have a thickness of 1.5 mm each, and the concave convex portions of the input layer 30A have a pitch of 1.0 mm. The input layer 30A is composed of polycarbonate, while the vibration propagation layer is composed of glass.

Fig. 4 is a cross-sectional view of the vibration transmission board. When the vibration entered by the vibration input pen 3 within a mark is inclined by an angle ϑ' with respect to the normal line to the vibration transmission board, the force acting on a mass point A on a protruding portion of the input layer 30A has a component Fₓ in the x-direction and a component F_{y} in the y-direction. If the input layer and the vibration propagation layer have a flat contact plane as in the conventional configuration, the component Fₓ is transmitted to a mass point in the vibration propagation layer, so that the vibration mode in the vibration propagation layer is asymmetrical laterally and the inclination of the vibration input pen causes a delay ε in phase. In contrast, in the present embodiment, the input layer 30A is in point-contact with the vibration propagation layer 30B because of the concave/convex portions thereon, whereby a slipping occurs between the mass points A, B and the component F_{y} alone is transmitted to the mass point B. Thus, the vibration entered in the vicinity of the center of the mark is transmitted as a vibration without the component in the x-direction to the mass point B at the center of the mark, whereby the vibration mode in the propagation layer 30C becomes laterally symmetrical, and the deterioration in the precision of position detection, resulting from the inclination of the vibration input pen 3, can be prevented.

As a modification, the precision of position detection can be further improved by filling the gap between the input layer 30A and the vibration propagation layer 30C with fluid having a refractive index comparable to that of the input layer.

### [Third embodiment]

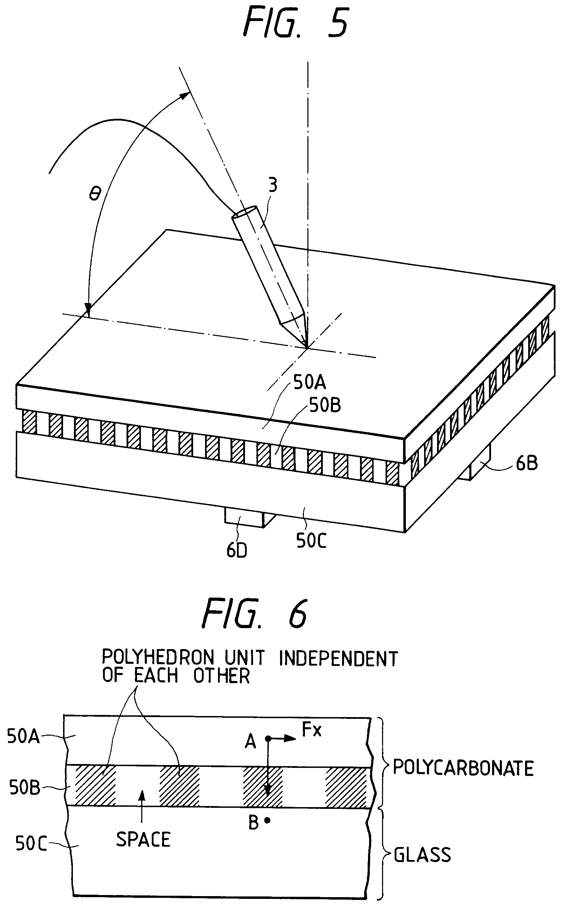

Fig. 5 illustrates a third embodiment, in which the vibration transmission board has a three-layered structure, composed of an input layer 50A, an intermediate layer 50B and a vibration propagation layer 50C. In the present embodiment the input layer 50A is composed of a polycarbonate plate of a thickness of 0.5 mm, while the vibration propagation layer 50C is composed of a glass plate of a thickness of 1.0 mm. The intermediate layer 50B is composed of cubic units of polycarbonate, with each side of 0.5 mm. The cubic units are arranged at equal intervals of 0.5 mm. The upper and bottom faces of the cubic unit are adhered to the input layer 50A and the vibration propagation layer 50B, respectively. The vibration entered by the vibration input pen 3 into the input layer 50A is transmitted through the intermediate layer 50B to the vibration propagation layer 50C, and is detected by the sensors 6A to 6D mounted on the propagation layer 50C (sensors 6A and 6C not shown in Fig. 5).

Fig. 6 is a cross-sectional view of the third embodiment. When the vibration entered by the vibration input pen has an angle ϑ' with respect to the normal line to the vibration transmitted board, the force acting on a mass point A in the input layer has a component Fₓ in the x-direction and a component F_{y} in the y-direction. If the component Fₓ is transmitted to a mass point B in the vibration propagation layer, the vibration mode in the vibration propagation layer becomes laterally asymmetrical, thus the inclination of the vibration input pen causes a phase delay ε. However, the intermediate layer composed of the cubic units arranged independently in the y-direction at regular intervals suppresses the transmission of the component Fₓ from the mass point A to B.

As a result, the component Fₓ becomes smaller at the mass point B in the vibration propagation layer, whereby the lateral asymmetry of the vibration in the vibration propagation layer is relaxed, and the deterioration of the precision of position detection, resulting from the inclination of the vibration input pen, can be prevented.

As a modification, the polyhedron unit to be employed in the intermediate layer may be formed, for example, as rectangular parallelepiped, triangle pole or tetrahedron.

### [Fourth embodiment]

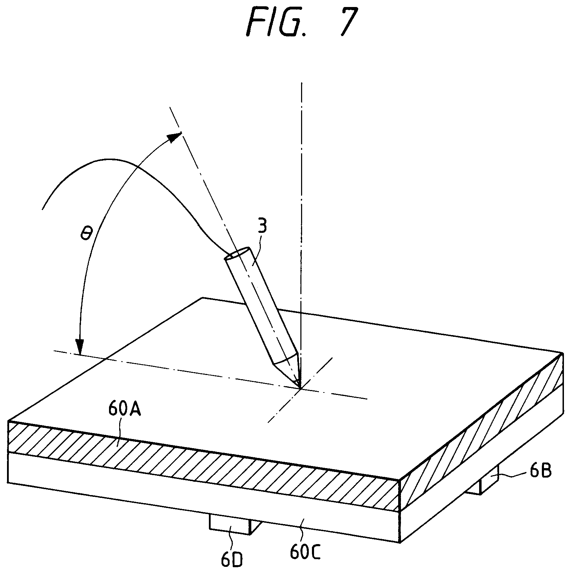

Fig. 7 illustrates a fourth embodiment, in which the vibration transmission board has a two-layered structure, composed of an input layer 60A and a vibration propagation layer 60C. The layers are mutually adhered, and the vibration entered by the vibration input pen 3 is transmitted through the input layer 60A to the vibration propagation layer 60C and is detected by the sensors 6A to 6D mounted thereon. In Fig. 7, an angle ϑ between the vibration input pen 3 and the vibration transmission board 8 represents an estimated artifical contact angle, anticipated at the use of the inputting coordinate device. In the present embodiment, the input layer 60A is composed of graphite having a hexagonal laminor crystal structure with a thickness of 0.8 mm, while the vibration propagation layer 60C is composed of a glass plate of a thickness of 1.5 mm.

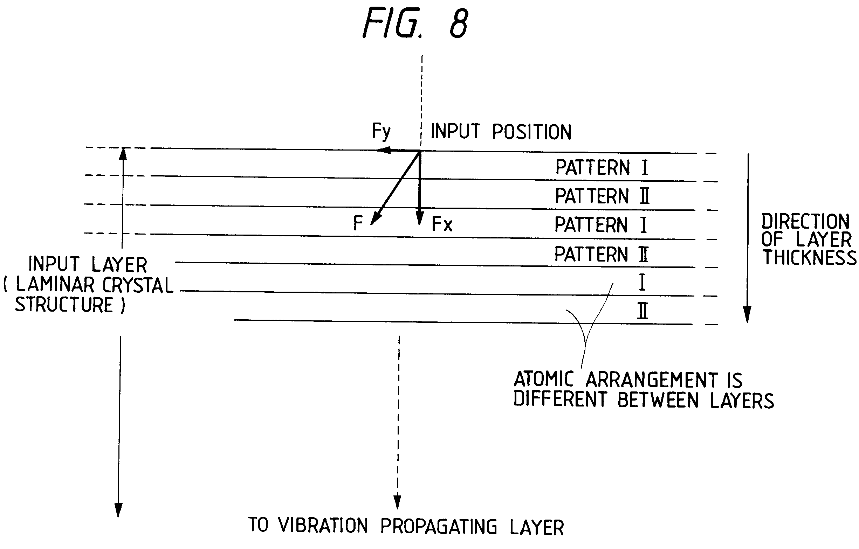

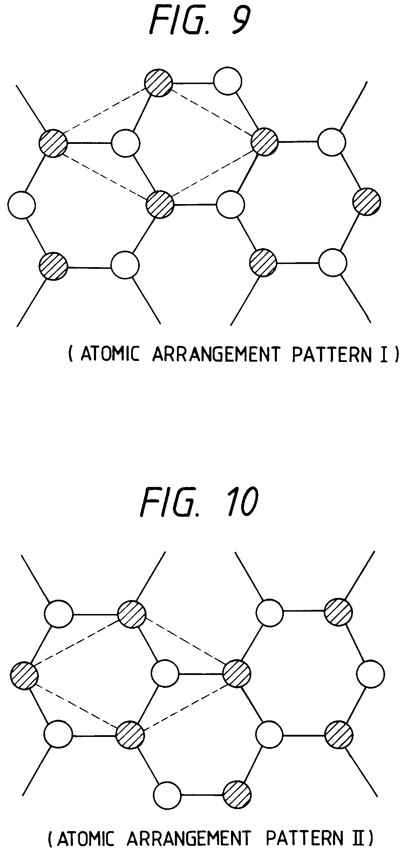

Fig. 8 is a enlarged cross-sectional view of the input layer 60A, and Figs. 9 and 10 show atomic arrangement of graphite in each layer of hexagonal laminar crystal. In the input layer 60A, the layers of graphite constituting laminar crystal structure are laminated in parallel manner in the direction of thickness, and the different atomic arrangements I, II shown in Figs. 9 and 10 are alternately laminated. The laminar crystal structure, in which each layers is combined each other by Van del Walls force, is easily deformed by a shearing force parallel to the layers, thus showing a low force transmitting ability between the layers, but has a high transmitting ability to a force component perpendicular to the layers. Thus, when a force vector F as shown in Fig. 8 is applied to the surface of the input layer 60A, a component Fₓ perpendicular to the layers is easily transmitted but a component F_{y} parallel to the layers is hardly transmitted.

Consequently, within the force entered by the vibration input pen, the shear force component F_{y} is suppressed in the input layer prior to the transmission to the vibration propagation layer 60C, so that the deterioration of the precision of position detection, resulting from the inclination of the vibration input pen, can be prevented.

As modifications, the input layer 60A may also be composed of a dicharcogenide compound such as molybdenum sulfide or tungsten sulfide.

Also, the durability of the input layer 60A can be improved by coating the input layer 60A with a polycarbonate protective sheet.

### [Fifth embodiment]

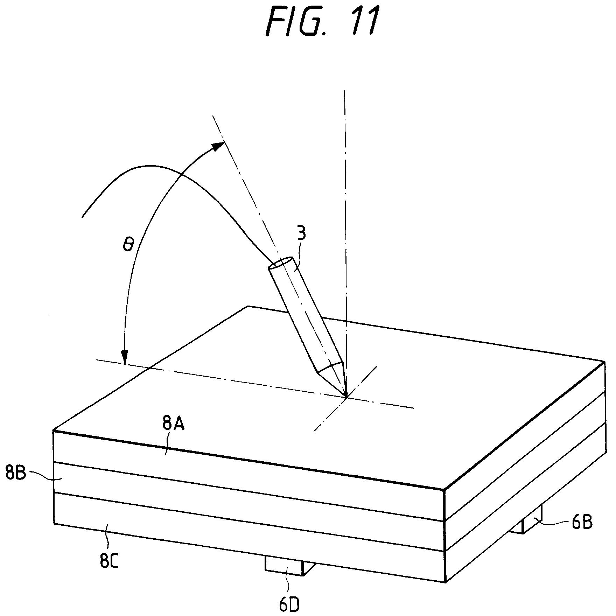

Fig. 11 illustrates the vibration transmission board of the present embodiment, which is formed by coating a glass plate of a thickness of 1.1 mm, constituting the vibration propagation layer 8C, with a PTFE (fluorinated resin) film of a thickness of 10 µm to constitute a solid lubricating layer 8B, and placing thereon a polycarbonate sheet of a thickness of 1.0 mm constituting the input layer 8A. The sensors 6A to 6D are mounted on the vibration propagation layer (sensors 6A and 6C not shown in Fig. 11).

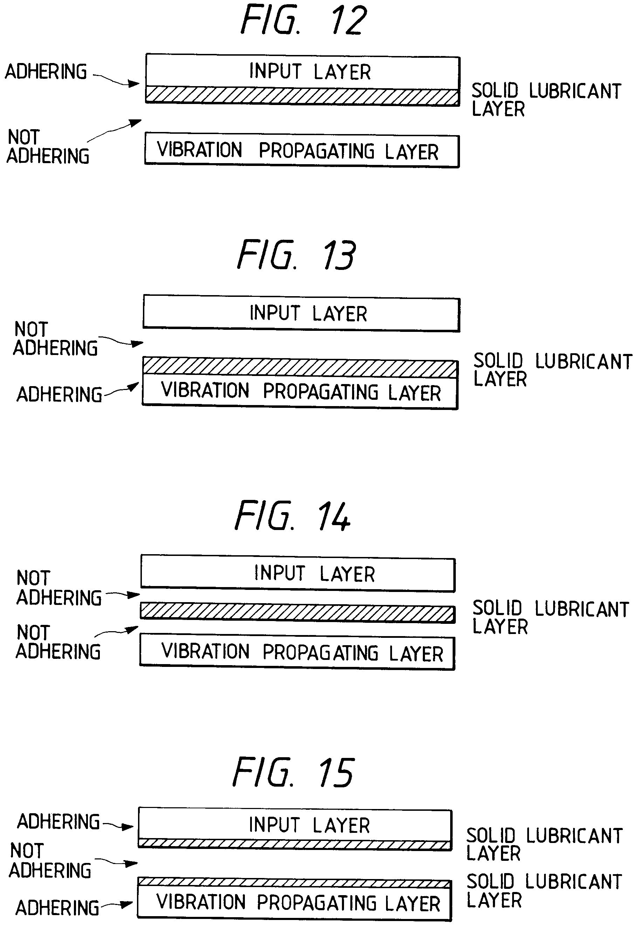

In the configuration shown in Fig. 11, the vibration propagation layer 8C and the solid lubricant layer 8B are adhered each other while the solid lubricant layer 8B and the input layer 8A are not adhered. There can be obtained four configurations, according to the position of the unadhered portion, as shown in Figs. 12 to 15. These configurations can be selected, according to the adhesive property and the lubrication property determined by the materials constituting the input layer 8A, solid lubricant layer 8B and vibration propagation layer 8C, and also according to the preparation process of the vibration transmission board.

In the board shown in Fig. 11, the input layer 8A is composed of a polycarbonate sheet. For the purpose of uniform formation of the solid lubricant layer, the PTFE film can be adhered more easily to the glass constituting the vibration propagation layer 8C than to the input layer 8A, and satisfactory lubrication is obtained between PTFE and polycarbonate. For these reasons the configuration shown in Fig. 13 is preferred. The configuration shown in Fig. 14 is preferably employed in case the layers do not adhere well, even if they have satisfactory lubricating property. Also the configuration shown in Fig. 15 is employed when the lubrication property is satisfactory in the solid lubricant layer itself but is not favorable between the lubricant layer and the input layer or the vibration propagation layer.

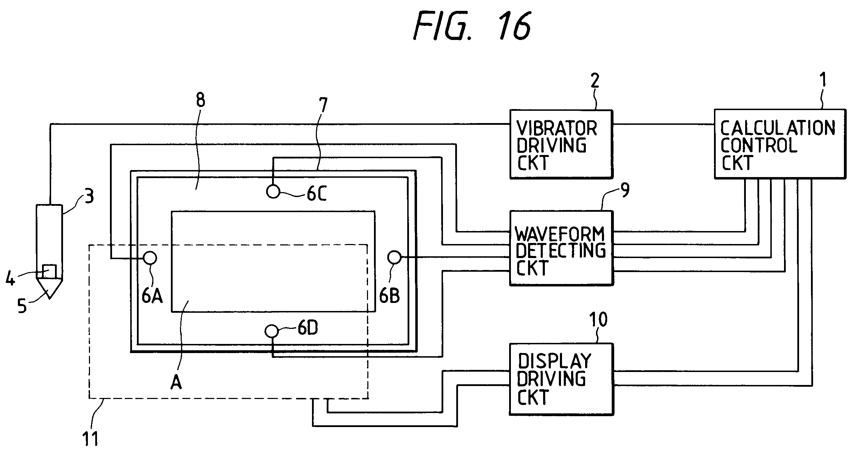

Fig. 16 shows the configuration of the inputting coordinate device employing the vibration transmission board of the present embodiment. A calculation/control circuit 1 controls the entire device and effects the calculation of the coordinates. A vibrator driving circuit 2 causes the vibration of a pen point of the vibration input pen 3. A vibration transmission board 8 receives the entry of the coordinate, by the contact of the vibration input pen 3. The vibration of the pen 3 is entered by the contact of the pen 3 within a solid-lined area A, and the coordinate position is calculated by measuring and processing thus entered vibration.

In order to prevent the propagating wave from being reflected at the ends of the vibration transmission board 8 and returning to the central portion thereof, the vibration transmission board 8 is surrounded by an antivibration member 7, and the vibration sensors 6A to 6D, composed for example of piezoelectric elements, for converting the mechanical vibration into electrical signal, are fixed in the vicinity of the internal boundary of the antivibration member 7. A signal waveform detecting circuit 9 sends signals, corresponding to the vibrations detected by the sensors 6A to 6D, to the calculation/control circuit 1. A display unit 11, capable of dot display such as a liquid crystal display, is positioned behind the vibration transmission board, and displays a dot in the position touched by the vibration input pen 3, through the function of the display driving circuit 10, the displayed dot being rendered observable through the vibration transmission board 8.

A vibrator 4 incorporated in the pen 3 is driven by the driving circuit 2. The drive signal therefor is supplied in the form of a pulse signal from the calculation/control circuit 1, then amplified with a predetermined gain in the driving circuit 2 and supplied to said vibrator 4. The electrical drive signal is converted by the vibrator 4 into a mechanical vibration, which is transmitted, through a pen point 5, to the vibration transmission board 8.

Now referring to Fig. 11, the vibration generated by the vibrator 4 enters the input layer 8A from the input pen 3, then transmitted through the solid lubricating layer 8B to the vibration propagation layer 8C, and is detected by the sensors 6A to 6D mounted on the vibration propagation layer 8C. In Fig. 11, an angle ϑ between the vibration input pen 3 and the vibration transmission board 8 is an estimated artificial contact angle anticipated at the use of the inputting coordinate device, considered within a range of 60° to 90°. That is, even if the vibration input pen 3 is inclined by 30° (ϑ') at maximum from a perpendicualr position to the vibration transmission board, the influence of such inclination can be liminated in the course of processing of the vibration, from the detection by the sensors 6A to 6D to the calculation/control circuit 1 through the detection circuit 9. The properties of the glass plate and the polycarbonate sheet employed in the present embodiment are shown in Table 1.

**Table 1**

| | Glass (vibration propagation layer) | Polycarbonate (input layer) |
|---|---|---|
| Density [g/cm³] | 2.5 | 1.2 |
| Bending elastic modulus [kg/mm²] | 7000 | 300 |
| Poisson's ratio [-] | 0.27 | 0.36 |

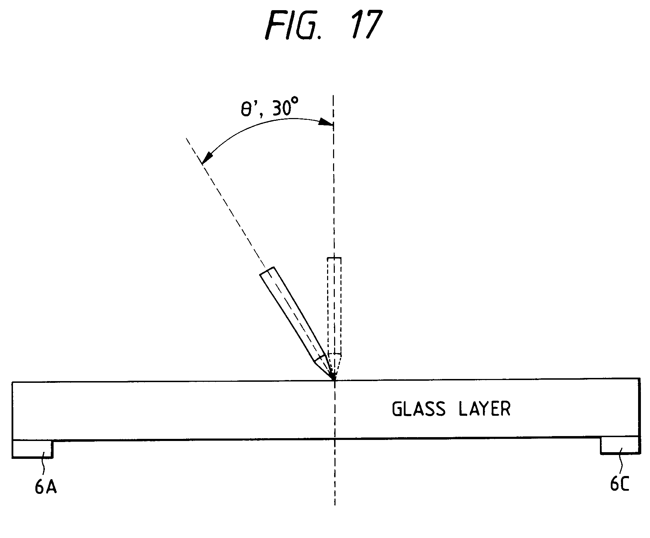

In the following there will be explained the behavior when the vibration transmission board is composed of a single glass plate only. Fig. 17 is a cross-sectional view of a model of the vibration transmission board composed solely of a glass plate. It is assumed that sensors 6A, 6C are provided at the same distance from the input position with the vibration input pen 3, and that the sensors and the input position are on the same cross section.

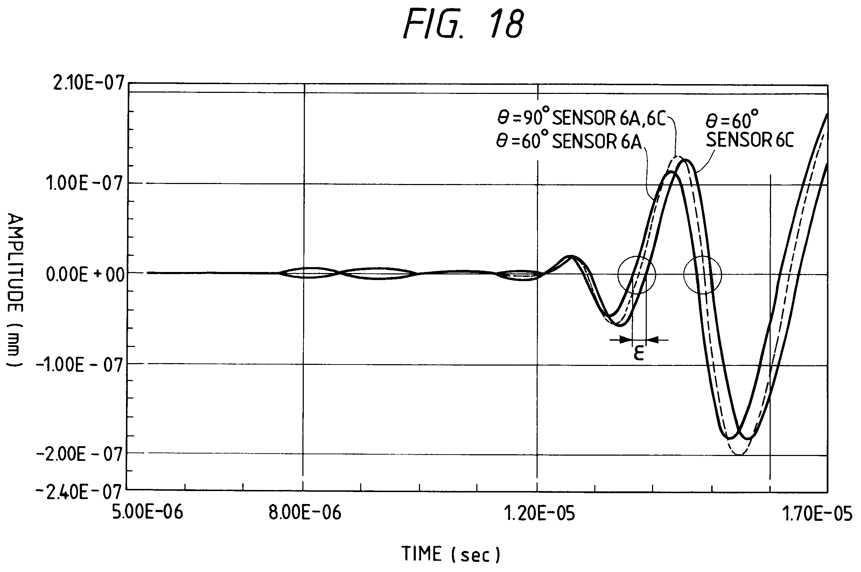

Fig. 18 shows the vibration waves, with the amplitude in the ordinate as a function of time in the abscissa, received by the sensors 6A, 6C, in case the pen perpendicularly contacts the vibration transmission board and in case the pen is inclined by 30° from the perpendicular position. In Fig. 18, a broken line indicates the vibration wave in case of the pen contact with an angle ϑ = 90° while solid lines indicate said vibration waves in case of a contact angle ϑ = 60°. As already explained before, by the inclination of the input pen 3, the sensors 6A, 6C respectively receive each different vibration wave, which shows a delay in time at crossing points with a line indicating zero amplitude, as represented in circles in Fig. 18. The delay in time, or the delay ε in phase, is already known to occur not only when the vibration transmission board is composed of a glass plate but also when it is composed of a single layer of a uniform material. The delay ε in phase, if increased, enhances the error in the positional detection in the recognition of position by the calculation/control circuit 1, based on the vibration waves received by the sensors 6A, 6C and transmitted through the detection circuit 9.

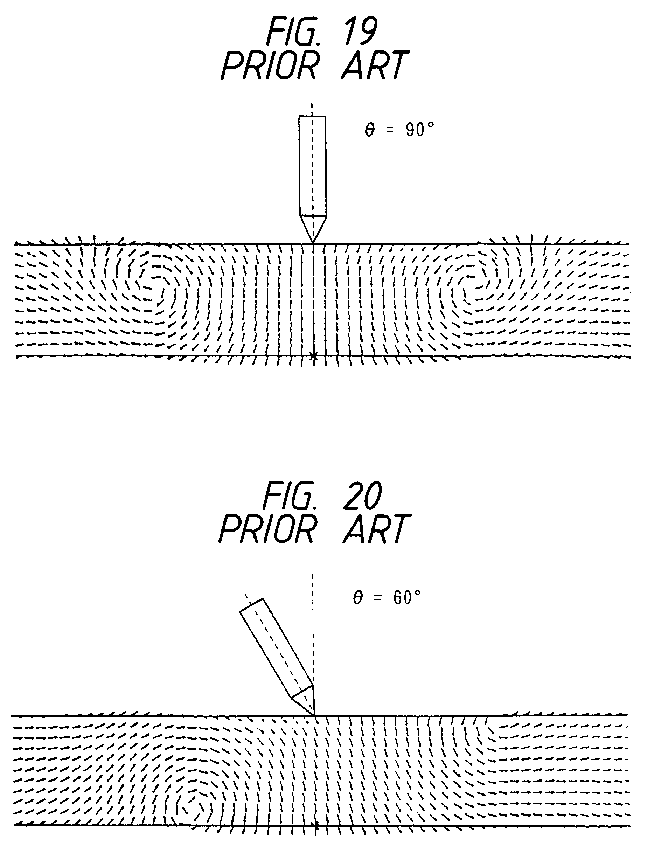

In order to clarify cause of such delay ε in phase resulting from the inclined positioning of the vibration input pen 3, Figs. 19 and 20 illustrate vibration modes in the cross section of a vibration transmission board, consisting of a single glass plate, wherein arrows indicate movement vectors in mass points of the board. When the vibration input pen is contacted at ϑ = 90°, the vibration in the board becomes laterally symmetrical as shown in Fig. 19, but when the pen is contacted at ϑ = 60°, the vibration in the board becomes asymmetrical as shown in Fig. 20, whereby the propagation times to the sensors 6A, 6C become different. Thus, in order to avoid the delay in phase resulting from the inclination of the vibration input pen, the vibration mode in the vibration propagation layer on which the sensors are mounted has to be laterally symmetrical even when the vibration input pen is inclined.

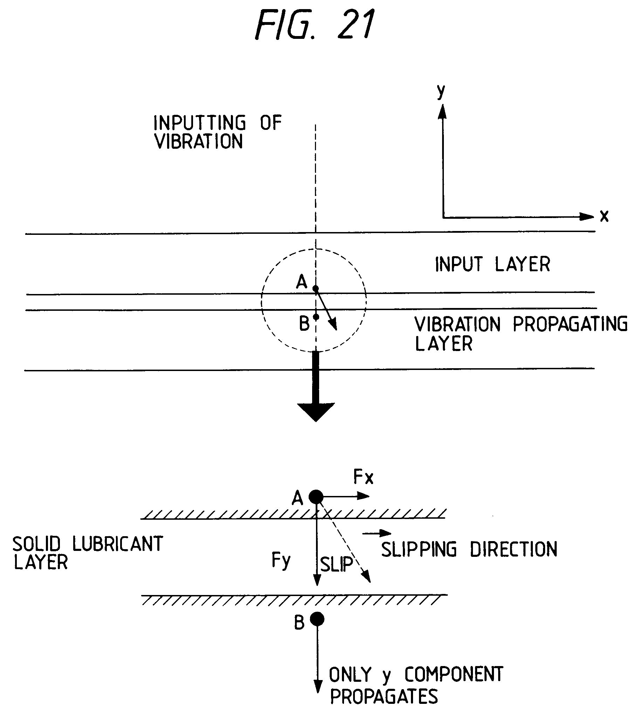

Fig. 21 shows the status of transmission of the vibration to the vibration transmission board 8 of the present embodiment from the inclined pen 3. When the vibration entered by the pen 3 has an angle ϑ with respect to the normal line to the board 8, the force acting on a mass point A in the input layer 8A, directly below the input position of the pen 3, has a component Fₓ in the x-direction and a component F_{y} in the y-direction. If the force on the mass point A is directly transmitted to a mass point B in the vibration propagation layer 8C, the vibration therein becomes laterally asymmetrical and the delay ε in phase is generated, depending on the inclination of the vibration input pen 3.

In the present embodiment, the solid lubricant layer 8B is provided between the input layer 8A and the vibration propagation layer 8C, in order to relax and eliminate the component Fₓ in the x-direction, acting on the mass point A by the slipping, whereby the component F_{y} of the y-direction along is transmitted to the mass point B. As a result, the vibration in the vibration transmission layer 8C becomes laterally symmetrical with respect to the input position of the vibration input pen 3, and the deterioration of precision of the positional detection, resulting from the inclination of the vibration input pen 3, can be prevented.

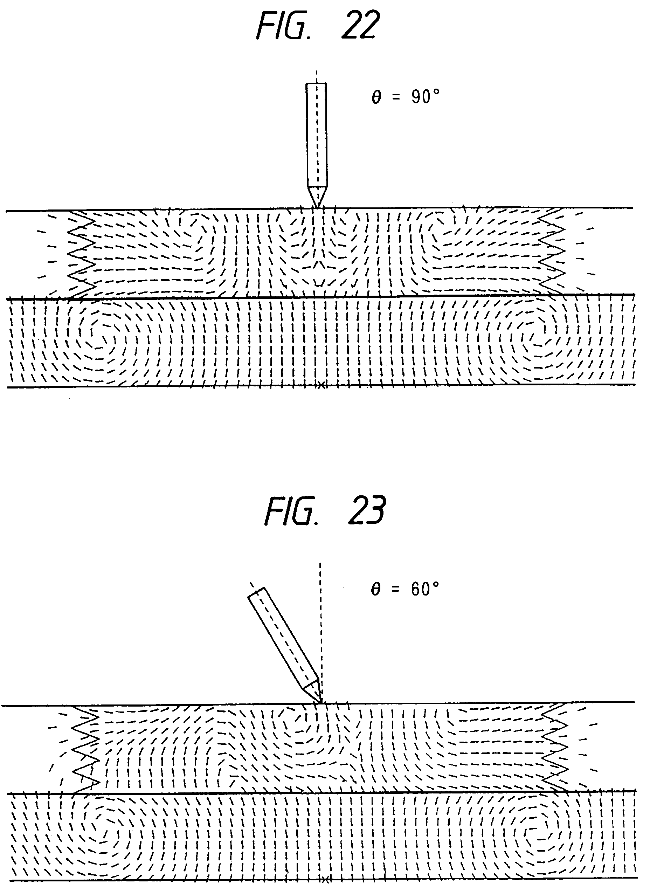

Figs. 22 and 23 illustrate vibration modes in the cross section of the vibration transmission board, when the vibration input pen 3 is contacted at ϑ = 90° and 60°. In these drawings, the solid lubricant layer 8B is represented by a straight line, as it is thinner than the input layer 8A and the vibration propagation layer 8C. The lateral asymmetry of the vibration generated in the input layer 8A is resolved in the propagation layer by the slipping between the input layer 8A and the solid lubricating layer 8B, whereby the vibration in the vibration propagation layer 8C becomes laterally symmetrical.

As modifications, the solid lubricating layer may also be composed of a Langmuir-Brogett film consisting of laminated monomolecular layers of a higher fatty acid, a higher alcohol or a higher amine.

As explained in the foregoing, the present embodiments can suppress the transmission of vibration to a direction perpendicular to the plane of the vibration transmission board, thereby suppressing the variation in vibration phase and improving accuracy of positional detection.

## Claims

1. A vibration transmission board for inputting coordinate by bringing a vibration input pen for generating vibration into contact with the board to detect the vibration with plural sensors through the board, comprising:
a member for allowing transmission of vibration only in a predetermined direction, the member being provided on the board such that the predetermined direction may be perpendicular to a plane of the board.

2. A vibration transmission board according to claim 1, comprising a multi-layered structure composed of an input layer to be contacted with the vibration input pen, a vibration propagation layer for transmitting the vibration to the sensors, and an intermediate layer with the member which is positioned between the input layer and the vibration propagation layer.

3. A vibration transmission board for inputting coordinate by bringing a vibration input pen for generating vibration into contact with the board to detect the vibration with plural sensors through the board, comprising:
a two-layered structure composed of an input layer to be contacted with the vibration input pen, and a vibration propagation layer for transmitting the vibration to the sensors, wherein the two layers are so formed as to be in point-contact with each other at an interface thereof.

4. A vibration transmission board according to claim 3, wherein semi-transparent marks indicating positions of the point-contact as inputting coordinate positions are provided in either of the two layers.

5. A vibration transmission board for inputting coordinate by bringing a vibration input pen for generating vibration into contact with the board to detect the vibration with plural sensors through the board, comprising:
a multi-layered structure composed of an input layer to be contacted with the vibration input pen, a vibration propagation layer for transmitting the vibration to the sensors, and an intermediate layer for transmitting the vibration entered from the input layer to the vibration propagation layer, wherein the intermediate layer is composed of plural polyhedron units arranged on a plane of the intermediate layer so as to form spaces between the polyhedron units.

6. A vibration transmission board for inputting coordinate by bringing a vibration input pen for generating vibration into contact with the board to detect the vibration with plural sensors through the board, comprising:
a two-layered structure composed of an input layer to be contacted with the vibration input pen, and a vibration propagation layer for transmitting the vibration to the sensors, wherein the input layer is composed of a member having a laminar crystal structure.

7. A vibration transmission board for inputting coordinate by bringing a vibration input pen for generating vibration into contact with the board to detect the vibration with plural sensors through the board, comprising:
a multi-layered structure composed of an input layer to be contacted with the vibration input pen, a vibration propagation layer for transmitting the vibration to the sensors, and a solid lubricant layer for transmitting the vibration, which is positioned between the input layer and the vibration propagation layer.

8. A vibration transmission board according to claim 7, wherein the input layer and the solid lubricant layer are adhered to each other, and the solid lubricant layer and the vibration propagation layer are not adhered to each other.

9. A vibration transmission board according to claim 7, wherein the vibration propagation layer and said solid lubricant layer are adhered to each other, and the solid lubricant layer and the input layer are not adhered to each other.

10. A vibration transmission board according to claim 7, wherein the input layer, the solid lubricant layer and the vibration propagation layer are not adhered to each other.

11. A vibration transmission board according to claim 7, wherein the solid lubricating layer has a two-layered structure, a first solid lubricant layer in the two-layered structure is adhered to the input layer while a second solid lubricant layer is adhered to the vibration propagation layer, but the first and second solid lubricant layers are not adhered to each other.
